# EUROPEAN PATENT APPLICATION

(11) **EP 4 233 558 A1**
(43) Date of publication of application: **30.08.2023**
(21) Application number: 21882529.7
(22) Date of filing: 30.09.2021
(51) Int. Cl.: A23L 11/45

(54) **CONVENIENCE FOOD COMPRISING PROCESSED FROZEN TOFU PRODUCT, AND PRODUCTION METHOD THEREOF**

(30) Priority: 22.10.2020 JP 2020177074
(71) Applicant: Asahimatsu Foods Co., Ltd., Iida City, Nagano 399-2561 (JP)
(72) Inventor: KITAHARA Akira, Iida City, Nagano 3992561 (JP)
(74) Representative: TBK
(86) International application number: PCT/JP2021/036058
(87) International publication number: WO 2022/085388

(57) **Abstract**

Provided is a processed Kori-tofu product that can be eaten by a simple eating method such as eating it as it is, eating it with a beverage such as milk, yogurt, or the like being poured on it, or eating it by putting it in a beverage such as milk, yogurt, or the like as in a conventional commercially available cereal food, or using it as it is as an ingredient of soup or a salad as in a conventional commercially available crouton, has high convenience, and has a property of maintaining a delicious texture even when any of such various eating methods is adopted.

A convenience food including a processed Kori-tofu product, the processed Kori-tofu product containing therein a carbohydrate component including any one kind or a combination of two or more kinds of indigestible dextrin, inulin, and dextrin. A method for producing a convenience food including a processed Kori-tofu product, the method including: an immersion water absorption step of immersing Kori-tofu in a carbohydrate solution in which a carbohydrate component including any one kind or a combination of two or more kinds of indigestible dextrin, inulin, and dextrin is dissolved to perform water absorption; and a drying step of drying the Kori-tofu after the immersion water absorption step.

## Description

### Technical Field

The present invention relates to a convenience food that can be eaten as it is or can be easily eaten simply by being put in a liquid food or beverage such as milk or soup, as in a conventionally commercially available cereal food or crouton, and a method for producing the convenience food. In particular, the present invention relates to a convenience food including a processed Kori-tofu product obtained by processing Kori-tofu, and a method for producing the convenience food.

### Background Art

Kori-tofu is generally cooked when eaten by a cooking method in which moisture is contained in the Kori-tofu and the Kori-tofu is cooked by heating. The Kori-tofu easily absorbs moisture because a sponge-like structure is formed by freeze-denaturation in the production process, and becomes soft and easy to eat by cooking by heating in a state of containing moisture.

It is rare to eat the Kori-tofu in a dried state. The texture of the Kori-tofu in a dried state includes clogging or catching in the throat, and moisture in the mouth is absorbed by the Kori-tofu, so that smooth eating is difficult.

Furthermore, the Kori-tofu swells rapidly by imparting moisture. When the Kori-tofu is not cooked by heating even if the Kori-tofu contains moisture, the Kori-tofu has a unique sticky texture derived from the sponge structure, and causes clogging or catching in the throat when swallowed.

Therefore, even if the Kori-tofu is directly immersed in a liquid such as milk or used as an ingredient of soup without being cooked by heating, a preferable texture cannot be obtained, and it cannot be said that this is an excellent use method.

In order to improve these unpreferable textures, methods such as frying in oil and sugar coating have been considered, but the texture has not been improved. In addition, these methods also give undesirable elements such that the Kori-tofu contains too much oil due to the sponge structure of the Kori-tofu, or sugar coating is not uniformly applied.

As for the Kori-tofu that can be eaten without being cooked by heating, there is a processed Kori-tofu product that can be eaten as it is after being seasoned (Patent Literature 1). This invention is an invention as a snack food, and does not consider intake as a meal purpose.

As described above, there are few use methods in which the Kori-tofu can be easily eaten as it is without cooking by heating.

A cereal food is a food in which cereals such as corn, rice, wheat, and barley are heat-processed and then dried. It is evaluated for its convenience because it is easily eaten as it is or in milk or the like, and it is often eaten as a staple food instead of rice or bread for breakfast or the like.

A crouton is a food obtained by cutting bread into squares and performing processing such as baking, stir-frying, and frying. It is familiar as a material for easily adding a texture or adding a flavor, such as a salad topping or a soup garnish.

### Citation List

### Patent Literature

Patent Literature 1: JP 2008-187989 A

### Summary of Invention

### Technical Problem

Cooking by heating is essential for making the Kori-tofu delicious, but it takes time and effort to cook for that purpose. For this reason, in recent years, cooking at home has been reduced, and thus a simpler eating method is required. For example, if the Kori-tofu can be eaten by a simple eating method such as eating it as it is, eating it with a beverage such as milk, yogurt, or the like being poured on it, or eating it by putting it in a beverage such as milk, yogurt, or the like as in a conventional commercially available cereal food, the convenience can be greatly improved. In addition, if the Kori-tofu can be eaten by a simple eating method such as using it as it is as a soup garnish or a salad topping as in a conventional commercially available crouton food, the convenience can be greatly improved.

Therefore, an object of the present invention is to make it possible to easily eat Kori-tofu as it is without cooking by heating.

For example, an object of the present invention is to propose the following processed Kori-tofu product that can be eaten as it is, or can be eaten by being put in a liquid in a normal temperature/cool temperature/warmed state or by being poured, and has a property of maintaining a delicious texture, and a method for producing the processed Kori-tofu product.

An object of the present invention is to propose a processed Kori-tofu product that can be eaten by a simple eating method such as eating it as it is, eating it with a beverage such as milk, yogurt, or the like being poured on it, or eating it by putting it in a beverage such as milk, yogurt, or the like as in a conventional commercially available cereal food, has high convenience, and becomes a cereal-like food having a property of maintaining a delicious texture even when any of such various eating methods is adopted, and a method for producing the processed Kori-tofu product.

In addition, an object of the present invention is to propose a processed Kori-tofu product that can be eaten by a simple eating method such as eating it as it is by adding it as a soup garnish or a salad topping as in a conventional commercially available crouton food, has high convenience, and becomes a crouton-like food having a property of maintaining a delicious texture even when any of such various eating methods is adopted, and a method for producing the processed Kori-tofu product.

### Solution to Problem

The inventors of the present application have found that the above-described problems can be solved by a convenience food including a processed Kori-tofu product containing a carbohydrate component therein and a method for producing the convenience food, which are exemplified below.

[1] A convenience food including a processed Kori-tofu product, the processed Kori-tofu product containing therein a carbohydrate component including any one kind or a combination of two or more kinds of indigestible dextrin, inulin, and dextrin.
[2] The convenience food according to [1], wherein the convenience food is a cereal-like food.
[3] The convenience food according to [1], wherein the convenience food is a crouton-like food.
[4] A method for producing a convenience food including a processed Kori-tofu product, the method including:
   an immersion water absorption step of immersing Kori-tofu in a carbohydrate solution in which a carbohydrate component including any one kind or a combination of two or more kinds of indigestible dextrin, inulin, and dextrin is dissolved to perform water absorption; and
   a drying step of drying the Kori-tofu after the immersion water absorption step.
[5] The method for producing a convenience food including a processed Kori-tofu product according to [4], wherein a mass ratio of the Kori-tofu subjected to the immersion water absorption step to the carbohydrate component dissolved in the carbohydrate solution is 1 : 0.5 to 1 : 2.4.

### Advantageous Effects of Invention

According to the present invention, it is possible to provide a processed Kori-tofu product that can be eaten by a simple eating method such as eating it as it is, eating it with a beverage such as milk, yogurt, or the like being poured on it, or eating it by putting it in a beverage such as milk, yogurt, or the like as in a conventional commercially available cereal food, has high convenience, and has a property of maintaining a delicious texture even when any of such various eating methods is adopted.

In addition, it is possible to provide a processed Kori-tofu product that can be eaten by a simple eating method such as eating it as it is by adding it as a soup garnish or a salad topping as in a conventional commercially available crouton food, has high convenience, and has a property of maintaining a delicious texture even when any of such various eating methods is adopted.

### Description of Embodiments

For the purpose of solving the above-described problems, the inventors of the present application performed the following evaluation tests.

### <Preparation of convenience food including processed Kori-tofu product containing carbohydrate component therein>

As Kori-tofu, generally commercially available Kori-tofu (trade name "Shin Asahi Tofu Goku Kizami" manufactured by ASAHIMATSU FOODS CO., LTD., rectangular parallelepiped of about 4 mm × 6 mm × 9 mm in three-way size) was used, and a convenience food including a processed Kori-tofu product containing a carbohydrate component therein was prepared in the following manner.

50 g of the above-described Kori-tofu was used, and a carbohydrate component was dissolved in 175 g of water, which was 3.5 times the amount of the Kori-tofu, to prepare a carbohydrate solution.

As the carbohydrate components, indigestible dextrin, inulin, dextrin, and sucrose were adopted, and 16 kinds of carbohydrate solutions with different blending ratios were prepared as described in Table 1 below.

The prepared carbohydrate solutions were heated to 90°C, 50 g of the above-described Kori-tofu was immersed in each of them, and the Kori-tofu was allowed to absorb water until the carbohydrate solution disappeared.

Thereafter, the Kori-tofu having absorbed the carbohydrate solution was spread on a net so as not to overlap with each of the Kori-tofu without being dehydrated, and dried by hot air drying at 80°C for 3 hours to prepare a convenience food including a processed Kori-tofu product containing 16 kinds of carbohydrate components of Tests 1 to 16 therein. The moisture contents after drying were all 5% or less.

### <Evaluation of chewability, smoothness through the throat, and appearance>

The prepared 16 kinds of processed Kori-tofu products were subjected to sensory evaluation by seven panelists, and evaluated for "chewability" (hardness at the time of insertion into the mouth and biting, and crispness), "smoothness through the throat" (no clogging or catching in the throat when swallowed), and "appearance" (color and shape of appearance). Each evaluation item was evaluated as follows.

### "Chewability" (hardness at the time of insertion into the mouth and biting, and crispness)

When the chewability of a commercially available cereal product (trade name: "Frugra" manufactured by Calbee, Inc.) as a comparative control product was rated as 5 points, the score was evaluated as 4 points for "the product is slightly inferior to the chewability of the comparative object product but can be sufficiently eaten as a cereal product", 3 points for "the product is inferior to the chewability of the comparative object product but can be eaten as a cereal product", and 2 points for "the product is considerably inferior to the chewability of the comparative object product and cannot be eaten as a cereal product", and the scores of seven panelists were averaged.

### "Smoothness through the throat" (no clogging or catching in the throat when swallowed)

When the smoothness through the throat of a commercially available cereal product (trade name: "Frugra" manufactured by Calbee, Inc.) as a comparative control product was rated as 5 points, the score was evaluated as 4 points for "the product is slightly inferior to the smoothness through the throat of the comparative object product but can be sufficiently eaten as a cereal product", 3 points for "the product is inferior to the smoothness through the throat of the comparative object product but can be eaten as a cereal product", and 2 points for "the product is considerably inferior to the smoothness through the throat of the comparative object product and cannot be eaten as a cereal product", and the scores of seven panelists were averaged.

"Appearance" (color and shape of appearance)
"∘": no deformation/discoloration, "△": some showed deformation/discoloration but the product had a commercial value, and "×": most showed deformation/discoloration and the product had no commercial value.

The results of sensory evaluation test 1 described above were as shown in Table 1.

**[Table 1]**

| | Weight ratio | | Actual usage | | | | Evaluation result | | |
|---|---|---|---|---|---|---|---|---|---|
| Test | Kori-tofu | Carbohydrate | Weight of Kori-tofu g | Weight of carbohydrate g | Amount of water added g | Kind of carbohydrate | Chewability | Smoothness through the throat | Appea rance |
| 1 | 1 | 0.5 | 50 | 25 | 175 | Indigestible dextrin | 4.0 | 3.1 | Δ |
| 2 | 1 | 1 | 50 | 50 | 175 | Indigestible dextrin | 4.2 | 3.9 | ○ |
| 3 | 1 | 2.4 | 50 | 120 | 175 | Indigestible dextrin | 4.0 | 3.4 | Δ |
| 4 | 1 | 3 | 50 | 150 | 175 | Indigestible dextrin | 3.6 | 3.3 | × |
| 5 | 1 | 0.5 | 50 | 25 | 175 | Inulin | 3.6 | 2.9 | Δ |
| 6 | 1 | 1 | 50 | 50 | 175 | Inulin | 4.1 | 3.9 | ○ |
| 7 | 1 | 2.4 | 50 | 120 | 175 | Inulin | 3.7 | 3.8 | ○ |
| 8 | 1 | 3 | 50 | 150 | 175 | Inulin | 3.0 | 3.3 | Δ |
| 9 | 1 | 0.5 | 50 | 25 | 175 | Dextrin (DE: 18) | 2.7 | 2.8 | Δ |
| 10 | 1 | 1 | 50 | 50 | 175 | Dextrin (DE: 19) | 4.2 | 3.8 | ○ |
| 11 | 1 | 2.4 | 50 | 120 | 175 | Dextrin (DE: 18) | 4.0 | 3.7 | ○ |
| 12 | 1 | 3 | 50 | 150 | 175 | Dextrin (DE: 18) | 4.1 | 3.6 | Δ |
| 13 | 1 | 0.5 | 50 | 25 | 175 | Sucrose | 2.8 | 3.3 | × |
| 14 | 1 | 1 | 50 | 50 | 175 | Sucrose | 3.2 | 3.4 | Δ |
| 15 | 1 | 2.4 | 50 | 120 | 175 | Sucrose | 2.4 | 3.3 | Δ |
| 16 | 1 | 3 | 50 | 150 | 175 | Sucrose | 2.3 | 3.4 | Δ |

Regarding "chewability", when sucrose was used as the carbohydrate component, and a mass ratio of the Kori-tofu subjected to the immersion water absorption step to the carbohydrate component (sucrose) dissolved in the carbohydrate solution was 1 : 2.4 and 1 : 3, the score was 2.4 and 2.3, respectively, which were levels at which "the product cannot be eaten as a cereal product".

Among the other 14 kinds, when dextrin was used as the carbohydrate component, and a mass ratio of the Kori-tofu subjected to the immersion water absorption step to the carbohydrate component (dextrin) dissolved in the carbohydrate solution was 1 : 0.5, the score was 2.7, which was the lowest among the other 14 kinds, but even with this, it was "chewability" close to the score 3 that can be evaluated as "the product can be eaten as a cereal product".

Regarding "smoothness through the throat", when dextrin was used as the carbohydrate component, and a mass ratio of the Kori-tofu subjected to the immersion water absorption step to the carbohydrate component (dextrin) dissolved in the carbohydrate solution was 1 : 0.5, the score was 2.8, which was the lowest among the 16 kinds, but even with this, it was "smoothness through the throat" close to the score 3 that can be evaluated as "the product can be eaten as a cereal product".

From these, it was confirmed that, from the viewpoint of good "chewability" and good "smoothness through the throat", when any one of indigestible dextrin, inulin, and dextrin is adopted as the carbohydrate component, the product can be eaten as a convenience food including a processed Kori-tofu product containing a carbohydrate component therein if a mass ratio of the Kori-tofu subjected to the immersion water absorption step to the carbohydrate component dissolved in the carbohydrate solution is in a range of 1 : 0.5 to 1 : 3.

On the other hand, when sucrose was adopted as the carbohydrate component, it was found that when a mass ratio of the Kori-tofu subjected to the immersion water absorption step to the carbohydrate component (sucrose) dissolved in the carbohydrate solution is in a range of 1 : 0.5 to 1 : 1, the product can be eaten as a convenience food including a processed Kori-tofu product containing a carbohydrate component therein, but when the mass ratio is in a range of 1 : 2.4 to 1 : 3, the product is not suitable as a convenience food including a processed Kori-tofu product containing a carbohydrate component therein.

It was found that as compared with sucrose with which the product is evaluated as being able to be eaten as a convenience food including a processed Kori-tofu product containing a carbohydrate component therein when a mass ratio of the Kori-tofu subjected to the immersion water absorption step to the carbohydrate component dissolved in the carbohydrate solution is in a range of 1 : 0.5 to 1 : 1, but evaluated as not suitable as a convenience food including a processed Kori-tofu product containing a carbohydrate component therein when the mass ratio is in a range of 1 : 2.4 to 1 : 3, indigestible dextrin, inulin, and dextrin that achieve "chewability" and "smoothness through the throat" with which the product can be eaten a convenience food including a processed Kori-tofu product containing a carbohydrate component therein when the mass ratio of the Kori-tofu subjected to the immersion water absorption step to the carbohydrate component dissolved in the carbohydrate solution is in a range of 1 : 0.5 to 1 : 3 are more suitable as a carbohydrate component when a convenience food including a processed Kori-tofu product containing a carbohydrate component therein is produced by the step described above.

In the evaluation of "appearance", the evaluation "×" (no commercial value) was given in Test 4 in which indigestible dextrin was used as the carbohydrate component, and a mass ratio of the Kori-tofu subjected to the immersion water absorption step to the carbohydrate component (indigestible dextrin) dissolved in the carbohydrate solution was 1 : 3. In Test 4, a brown color of the appearance was increased. It seemed that brownish discoloration of the carbohydrate occurred. From this, it was found that when a ratio of the carbohydrate is excessively increased, the brown color of the appearance is increased, and the evaluation of the appearance is deteriorated.

Regarding sucrose, as described above, as compared with indigestible dextrin, inulin, and dextrin, it seemed to be not suitable to adopt sucrose as a carbohydrate component when a convenience food including a processed Kori-tofu product containing a carbohydrate component therein in the step described above. However, even when, as in Test 13, a mass ratio of the Kori-tofu subjected to the immersion water absorption step to the carbohydrate component (sucrose) dissolved in the carbohydrate solution was 1 : 0.5, and a ratio of the carbohydrate was remarkably smaller than the mass ratio of 1 : 3 described above, the appearance was evaluated as "×" and "no commercial value".

Also in this respect, as compared with indigestible dextrin, inulin, and dextrin, sucrose was found to be not suitable for adoption as a carbohydrate component when a convenience food including a processed Kori-tofu product containing a carbohydrate component therein is produced in the step described above.

From these results of sensory evaluation test 1, the inventors of the present application have found that by immersing Kori-tofu in an aqueous solution of a carbohydrate to allow the inside of the Kori-tofu to absorb water, and then drying the Kori-tofu, it is possible to produce a convenience food that achieves an improvement in texture and an improvement in taste when the convenience food is eaten as it is, and an appearance having a commercial value.

Next, since a general cereal food is not only eaten as it is, but also eaten by being put in a beverage such as milk, yogurt, or the like, or in combination with a liquid such as being added as a soup garnish as in a conventional commercially available crouton food, the following tests were performed.

Among the carbohydrates having good sensory test results from sensory test 1 described above, various samples in which a mass ratio of the Kori-tofu subjected to the immersion water absorption step using dextrin as a carbohydrate component to the carbohydrate component dissolved in the carbohydrate solution was changed were prepared, and a sensory test of texture when a commercially available cereal food and a commercially available crouton were placed in milk (temperature: 6°C) and soup (temperature: 65°C) as comparative controls was performed.

The prepared 4 kinds of processed Kori-tofu products were subjected to sensory evaluation by seven panelists, and evaluated for "texture after 30 seconds" (hardness of texture when bitten after 30 seconds in liquid) and "texture after 1 minute" (hardness of texture when bitten after 1 minute in liquid). Each evaluation item was evaluated as follows.

In the case of handling the product as a convenience food that is a cereal-like food, when the texture after a lapse of a specified time (30 seconds, 1 minute) from the time when a commercially available cereal product (trade name: "Frugra" manufactured by Calbee, Inc.) as a comparative control product was put in milk was rated as 5 points, the score was evaluated as 4 points for "the product is slightly inferior to the texture of the comparative object product but the hardness of the texture is sufficiently maintained", 3 points for "the product is inferior to the texture of the comparative object product but the hardness of the texture is maintained", and 2 points for "the product is considerably inferior to the texture of the comparative object product and the hardness of the texture is not maintained", and the scores of seven panelists were averaged. (Sensory evaluation test 2)

In the case of handling the product as a convenience food that is a crouton-like food, when the texture after a lapse of a specified time (30 seconds, 1 minute) from the time when a commercially available crouton product (trade name: "Crouton Plain Taste" manufactured by NIPPN CORPORATION) as a comparative control product was put in commercially available instant corn potage soup was rated as 5 points, the score was evaluated as 4 points for "the product is slightly inferior to the texture of the comparative object product but the hardness of the texture is sufficiently maintained", 3 points for "the product is inferior to the texture of the comparative object product but the hardness of the texture is maintained", and 2 points for "the product is considerably inferior to the texture of the comparative object product and the hardness of the texture is not maintained", and the scores of seven panelists were averaged. (Sensory evaluation test 3)

The results of sensory test 2 and sensory test 3 were as shown in Tables 2 and 3.

**[Table 2]**

| | Weight ratio | | Actual usage | | | Evaluation after elapse of time | |
|---|---|---|---|---|---|---|---|
| Test | Kori-tofu | Carbohydrate | Weight of Kori-tofu (g) | Weight of carbohydrate (g) | Amount of water added (g) | 30 seconds | 1 minute |
| 17 | 1 | 0 | 50 | 0 | 175 | 2.1 | 2.0 |
| 18 | 1 | 0.5 | | 25 | | 2.7 | 2.8 |
| 19 | 1 | 1 | | 50 | | 3.4 | 3.2 |
| 21 | 1 | 2.4 | | 120 | | 4.8 | 4.6 |
| 22 | 1 | 3 | | 150 | | 4.9 | 4.7 |

**[Table 3]**

| | Weight ratio | | Actual usage | | | Evaluation after elapse of time | |
|---|---|---|---|---|---|---|---|
| Test | Kori-tofu | Carbohydrate | Weight of Kori-tofu (g) | Weight of carbohydrate (g) | Amount of water added (g) | 30 seconds | 1 minute |
| 23 | 1 | 0 | 50 | 0 | 175 | 2.3 | 2.3 |
| 24 | 1 | 0.5 | | 25 | | 3.6 | 3.6 |
| 25 | 1 | 1 | | 50 | | 4.4 | 4.4 |
| 26 | 1 | 2.4 | | 120 | | 4.7 | 4.7 |
| 27 | 1 | 3 | | 150 | | 4.9 | 4.6 |

In Test 17 in Table 2, the normal Kori-tofu not containing a carbohydrate component was evaluated as 2.1 and 2.0 after 30 seconds and 1 minute, respectively, indicating that the hardness was not maintained at all, and a sticky texture and difficulty in swallowing peculiar to unheated Kori-tofu were felt. Therefore, it was found that the state of not containing a carbohydrate component therein does not lead to evaluation as a cereal-like food at all.

In Tests 18 to 22, it can be said that the processed Kori-tofu product containing, as dextrin, a carbohydrate component having a mass ratio of 1 : 0.5 to 1 : 3 between the Kori-tofu subjected to the immersion water absorption step in which good evaluation was observed in sensory test 1 and the carbohydrate component dissolved in the carbohydrate solution was inferior to the texture of the comparative control product but the hardness of the texture was maintained in both cases of 30 seconds and 1 minute after the addition to milk. In particular, when the mass ratio of the Kori-tofu subjected to the immersion water absorption step to the carbohydrate component dissolved in the carbohydrate solution was in a range of 1 : 2.4 to 1 : 3, evaluation equivalent to or higher than that of the test control product was also observed, and it was found that the processing greatly contributes to maintaining the texture when the processed Kori-tofu product is eaten by being put in a liquid such as milk.

Also in Table 3, as in sensory test 2, the normal Kori-tofu containing no carbohydrate component in Test 23 was evaluated as 2.3 in both cases of after 30 seconds and after 1 minute, and the hardness was not maintained, and a sticky texture and difficulty in swallowing peculiar to unheated Kori-tofu were felt. Therefore, it was found that the state of not containing a carbohydrate component therein does not lead to evaluation as a crouton-like food at all.

Also in Tests 24 to 27, as in sensory test 2, it can be said that the processed Kori-tofu product containing, as dextrin, a carbohydrate component having a mass ratio of 1 : 0.5 to 1 : 3 between the Kori-tofu subjected to the immersion water absorption step and the carbohydrate component dissolved in the carbohydrate solution was inferior to the texture of the comparative control product but the hardness of the texture was maintained in both cases of 30 seconds and 1 minute after the addition to soup.

From these results, it was found that the processed Kori-tofu product having a mass ratio of 1 : 0.5 to 1 : 3 between the Kori-tofu subjected to the immersion water absorption step and the carbohydrate component dissolved in the carbohydrate solution has a property of maintaining a crispy hard texture unlike normal Kori-tofu without affecting the temperature even when the processed Kori-tofu product is put in cold milk or warm soup.

According to the study of the inventors described above, it was confirmed that when a convenience food including a processed Kori-tofu product containing a carbohydrate component therein is produced through an immersion water absorption step of immersing Kori-tofu in a carbohydrate solution in which the carbohydrate component is dissolved to perform water absorption, and a drying step of drying the Kori-tofu after the immersion water absorption step, any one kind or two or more kinds of indigestible dextrin, inulin, and dextrin are used as the carbohydrate component so that a mass ratio of the Kori-tofu subjected to the immersion water absorption step to the carbohydrate component dissolved in the carbohydrate solution is in a range of 1 : 0.5 to 1 : 2.4, whereby a product that can be evaluated as being able to be eaten as a cereal-like or crouton-like convenience food and as having a commercial value from the viewpoint of all of "chewability", "smoothness through the throat", and "appearance" can be produced.

In addition, in this case, when the mass ratio of the Kori-tofu subjected to the immersion water absorption step to the carbohydrate component dissolved in the carbohydrate solution was 1 : 1, all of the cases of indigestible dextrin, inulin, and dextrin showed particularly excellent chewability and smoothness through the throat and a good appearance.

Next, studies were conducted on the case where the carbohydrate solution was not heated, the case where a dehydration step was performed before the drying step after the immersion water absorption step, and the case where the same amount of indigestible dextrin and inulin were used without changing the total amount of carbohydrate components, in the preparation step of Test 2 of sensory evaluation test 1 described above.

Test 2 of sensory evaluation test 1 described above was used as a comparative object, and a convenience food including a processed Kori-tofu product was prepared as follows, and evaluation test 4 was performed.

In Test 2 as a comparative object, as described above, a convenience food is produced as follows.

As Kori-tofu, 50 g of generally commercially available Kori-tofu (trade name "Shin Asahi Tofu Goku Kizami" manufactured by ASAHIMATSU FOODS CO., LTD., rectangular parallelepiped of about 4 mm × 6 mm × 9 mm in three-way size) was used, and indigestible dextrin was dissolved in 175 g of water, which was 3.5 times the amount of the Kori-tofu, by adjusting a mass ratio of the indigestible dextrin to the Kori-tofu subjected to an immersion water absorption step to 1 : 1 to prepare a carbohydrate solution. The prepared carbohydrate solution was heated to 90°C, and an immersion water absorption step of immersing 50 g of the above-described Kori-tofu therein and allowing the Kori-tofu to absorb water until the carbohydrate solution disappeared was performed. Thereafter, the Kori-tofu having absorbed the carbohydrate solution was spread on a net so as not to overlap with each of the Kori-tofu without being dehydrated, and a drying step of drying the Kori-tofu by hot air drying at 80°C for 3 hours to prepare a convenience food including a processed Kori-tofu product having a moisture content after drying of 5% or less.

Convenience foods (Test 28 to Test 31) including a processed Kori-tofu product were prepared by changing only a part of the preparation step of Test 2 described above as described in Table 4 below.

Test 28: A convenience food including a processed Kori-tofu product was prepared in the same step except that 50 g of the Kori-tofu was immersed without heating the carbohydrate solution in the preparation step described above.

Test 29: A convenience-like food product including a processed Kori-tofu product was prepared in the same step except that a dehydration step was added before the drying step after the immersion water absorption step in the preparation step described above.

Test 30: A convenience food including a processed Kori-tofu product was prepared in the same step except that the drying temperature in the drying step was set to 50°C in the preparation step described above.

Test 31: A convenience food including a processed Kori-tofu product was prepared in the same step except that the same amount of indigestible dextrin and inulin were used without changing the total amount of carbohydrate components in the preparation step described above.

**[Table 4]**

| | Actual usage | | | | |
|---|---|---|---|---|---|
| Test | Weight of Kori-tofu g | Weight of carbohydrate g | Amount of water added g | Changes in production method | Difference from Test 2 |
| 28 | 50 | 50 | 175 | Solution was not heated (water temperature of 25°C) | Almost no difference |
| 29 | | | | Dehydrated after heating | Occurrence of crushing in appearance |
| 30 | | | | Drying temperature of 50°C | Almost no difference |
| 31 | | | | Mixed carbohydrates (25 g of indigestible dextrin + 25 g of inulin) | Almost no difference |

As compared with Test 2, the following was found in each test.

When heating was not performed in Test 28, the solution temperature was 25°C, and the time required for water absorption was slightly longer than that in Test 2. After drying, the appearance was almost the same as in Test 2, and sensory evaluation similar to the sensory evaluation described above was performed. As a result, both of chewability and smoothness through the throat were good. Therefore, it was found that a good convenience food including a processed Kori-tofu product can be produced even with an unheated solution. From the viewpoint of microorganism control in production, it was considered desirable to apply heating.

In Test 29, when the heated solution was dehydrated by press dehydration after water absorption, discoloration and crushing of the final product occurred, and the appearance was deteriorated. Deformation due to crushing led to harder chewability and less crispness, and it was shown that dehydration is not necessary from the viewpoint of product quality although the effect of shortening the drying time and reducing the cost is expected by dehydration.

Since the drying temperature was lowered in Test 30, the drying time took 7 hours, which was twice or more the drying time in Test 2, but the quality was equivalent to that in Test 2. Drying depends on a drying temperature and an amount of a product to be dried, and therefore, although it cannot be said unconditionally, it is preferable to spread the products on a drying net so as not to overlap with each of the products as in Test 2. When the amount is increased, not only the drying time is extended, but also a portion not exposed to wind is formed, and drying unevenness occurs. Therefore, it was found that the influence of drying on quality is affected by the amount of drying at one time rather than the influence of temperature, and it is important to determine an appropriate drying amount for better drying.

In Test 31, two or more kinds of carbohydrate components were mixed instead of a single carbohydrate component, but sensory evaluation similar to the sensory evaluation described above was performed. As a result, both of chewability and smoothness through the throat were good and bear comparison with those of the convenience food including a processed Kori-tofu product of Test 2. Therefore, it was found that even when two or more kinds among indigestible dextrin, inulin, and dextrin are arbitrarily combined and used as a carbohydrate component, the same mechanism as in the case of use alone is exhibited.

From the above study results, the inventors of the present application have found that, by taking advantage of the fact that a dried product in a state in which a carbohydrate is contained in the inside of Kori-tofu has completely different taste and texture from those of existing Kori-tofu, has a dramatically improved adverse effect on eating such as clogging or catching in the throat, and exhibits a unique crispy texture that is considered to be due to the dried carbohydrate, it is possible to propose a processed Kori-tofu product that maintains the texture even when the processed Kori-tofu product is put in a liquid such as milk or soup, and a method for producing the processed Kori-tofu product.

That is, the inventors have found that a convenience food including a processed Kori-tofu product containing therein the above-described carbohydrate component produced by the production method described above is a cereal-like food that can be eaten as it is, eaten with a beverage such as milk, yogurt, or the like being poured on it, or eaten by being put in a beverage such as milk, yogurt, or the like as in a conventional commercially available cereal food.

In addition, the inventors have found that a convenience food including a processed Kori-tofu product containing therein the above-described carbohydrate component produced by the production method described above is a crouton-like food that can be eaten as it is by being added as a soup garnish or a salad topping as in a conventional commercially available crouton food.

Both of them are convenience foods that can be eaten by a simple eating method, has high convenience, and has a property of maintaining a delicious texture even when any of various eating methods conventionally performed for a cereal food and a crouton as described above is adopted.

A convenience food including a processed Kori-tofu product containing the above-described carbohydrate component therein can be produced by an immersion water absorption step of immersing Kori-tofu in a carbohydrate solution in which the carbohydrate component is dissolved to perform water absorption, and a drying step of drying the Kori-tofu after the immersion water absorption step.

According to the study of the inventors, it is possible to produce a convenience food including a processed Kori-tofu product containing a carbohydrate component therein through an immersion water absorption step of immersing Kori-tofu in a carbohydrate solution in which the carbohydrate component is dissolved to perform water absorption, and a drying step of drying the Kori-tofu after the immersion water absorption step.

In this case, even when any one of indigestible dextrin, inulin, and dextrin is used alone as the carbohydrate component, or any two or more kinds of them are used in combination, it is possible to produce a convenience food including a processed Kori-tofu product containing a carbohydrate component therein, which exhibits a good appearance with good "chewability" and "smoothness through the throat".

In order to produce a convenience food including a processed Kori-tofu product containing a carbohydrate component therein, which exhibits a good appearance with good "chewability" and "smoothness through the throat", it is desirable that a mass ratio of the Kori-tofu subjected to the immersion water absorption step to the carbohydrate component dissolved in the carbohydrate solution is in a range of 1 : 0.5 to 1 : 2.4.

As a convenience food including a processed Kori-tofu product, when it is assumed that the convenience food is eaten with a beverage such as milk, soy milk, yogurt, or the like being poured on it, or eaten by being put in a beverage such as milk, soy milk, yogurt, or the like and scooped with a spoon as in a general cereal product, the above-described convenience food can be prepared, for example, using Kori-tofu cut into a size of about 5 mm square.

For example, using generally commercially available Kori-tofu (trade name "Shin Asahi Tofu Goku Kizami" manufactured by ASAHIMATSU FOODS CO., LTD., rectangular parallelepiped of about 4 mm × 6 mm × 9 mm in three-way size), the above-described convenience food can be prepared.

Note that, when it is assumed that the convenience food is eaten as it is as in a general cereal product, for example, when it is assumed that the convenience food is eaten such that the convenience food is picked up by hand and put in the mouth directly, Kori-tofu having a size different from the above-described size can also be used. For example, even when Kori-tofu having a different size such as trade name "Shin Asahi Tofu 1/150 size" (rectangular parallelepiped of about 5.4 mm × 4.6 mm × 18.0 mm in three-way size) manufactured by ASAHIMATSU FOODS CO., LTD. or trade name "Shin Asahi Tofu 1/60 size" (rectangular parallelepiped of about 13.5 mm × 4.6 mm × 18.0 mm in three-way size) manufactured by ASAHIMATSU FOODS CO., LTD. is used, the above-described convenience food can be prepared similarly.

The above-described Kori-tofu is immersed in a carbohydrate solution in which a carbohydrate component including any one kind or a combination of two or more kinds of indigestible dextrin, inulin, and dextrin is dissolved to perform water absorption. At this time, the amount of water used for the carbohydrate solution is preferably 3.5 to 5 times the weight of the Kori-tofu. In the case of this amount or less, the carbohydrate solution does not uniformly permeate the whole Kori-tofu, and unevenness occurs in the final product. On the other hand, in the case of this amount or more, the carbohydrate solution remains even after the Kori-tofu has completely absorbed water, and all the carbohydrate components are not transferred into the Kori-tofu, and loss of the carbohydrate components occurs in the residual liquid. There is also a method for preparing a large amount of carbohydrate solutions and sequentially absorbing water like a batch method, but it is difficult to control the amount of water absorption, and the method is not suitable for the method of the present invention.

The mass ratio of the Kori-tofu subjected to the immersion water absorption step to the carbohydrate component dissolved in the carbohydrate solution can be in a range of 1 : 0.5 to 1 : 2.4.

According to the study of the inventors, the ratio of the mass ratio described above has a great influence on the texture of a convenience food including a processed Kori-tofu product. According to the study of the inventors, the mass ratio of 1 : 0.5 to 1 : 2.4 described above was desirable in order to obtain a convenience food including a processed Kori-tofu product that has a preferable texture in both "chewability" and "smoothness through the throat" and also has a good evaluation on appearance.

Even when this carbohydrate solution is a carbohydrate solution not heated and at normal temperature, it is possible to produce a convenience food including the processed Kori-tofu product of this embodiment by the step described above, but a more preferable texture is obtained when the carbohydrate solution is heated and the Kori-tofu is immersed at a temperature of 60 to 90°C.

The water absorption time in the immersion water absorption step is affected by the amount of Kori-tofu to be used and the presence or absence of stirring, but when the water absorption time is about 1 to 3 minutes, water is uniformly absorbed as a whole.

When the Kori-tofu after water absorption is dried in the drying step, for example, a drying step by hot air drying can be adopted. The higher the drying temperature, the faster the drying, and the lower the drying temperature, the slower the drying. In addition, the larger the amount of drying at one time, the longer the drying time.

The process is completed when the moisture content of the dried Kori-tofu is 5% or less.

Since the Kori-tofu contains a large amount of carbohydrate components, each of the Kori-tofu is easily lumped through the drying step, and it is preferable to perform stirring periodically during drying. Alternatively, there is also a method in which a lump is broken after being completely dried.

As described above, it is possible to provide a convenience food that is a processed Kori-tofu product that can be easily and instantly eaten as in a conventional commercially available cereal food or crouton food, and a method for producing the convenience food.

The convenience food including the above-described processed Kori-tofu product produced by the production method described above is a product that has a crispy and chewy texture and good smoothness through the throat even as it is. This is different from a poor texture and poor smoothness through the throat when normal Kori-tofu is eaten in a dried product state.

When an attempt is made to eat normal Kori-tofu by putting it in milk, soy milk, yogurt, or the like as in a conventional commercially available cereal food, the Kori-tofu immediately contains moisture due to the high water absorption rate peculiar to the Kori-tofu, and the texture of the Kori-tofu becomes a sticky and uncomfortable texture.

The convenience food of the present invention including the above-described processed Kori-tofu product produced by the above-described production method of the present invention kept a crispy texture for about 30 seconds to 1 minute even when it was put in a liquid such as milk or soup, and allowed for enjoying a light texture even when it was put in the mouth together with a liquid peculiar to a cereal or crouton food.

Although the embodiments of the present invention have been described above, the present invention is not limited to the above-described embodiments, and various modifications can be made within the technical scope understood from the description of the claims.

## Claims

1. A convenience food comprising a processed Kori-tofu product, the processed Kori-tofu product containing therein a carbohydrate component including any one kind or a combination of two or more kinds of indigestible dextrin, inulin, and dextrin.

2. The convenience food according to claim 1, wherein the convenience food is a cereal-like food.

3. The convenience food according to claim 1, wherein the convenience food is a crouton-like food.

4. A method for producing a convenience food comprising a processed Kori-tofu product, the method comprising:
an immersion water absorption step of immersing Kori-tofu in a carbohydrate solution in which a carbohydrate component including any one kind or a combination of two or more kinds of indigestible dextrin, inulin, and dextrin is dissolved to perform water absorption; and
a drying step of drying the Kori-tofu after the immersion water absorption step.

5. The method for producing a convenience food comprising a processed Kori-tofu product according to claim 4, wherein a mass ratio of the Kori-tofu subjected to the immersion water absorption step to the carbohydrate component dissolved in the carbohydrate solution is 1 : 0.5 to 1 : 2.4.
